# NEUE EUROPÄISCHE PATENTSCHRIFT

(11) **EP 2 500 208 B2**
(45) Veröffentlichungstag und Bekanntmachung des Hinweises auf die Entscheidung über den Einspruch: **07.04.2021**
(45) Hinweis auf die Patenterteilung: 23.05.2018
(21) Anmeldenummer: 12152679.2
(22) Anmeldetag: 26.01.2012
(51) Int. Cl.: B60L 11/18, B60L 3/00, B60L 3/04, H02H 3/33

(54) **Schutzschaltungsanordnung**
Protective circuit assembly
Agencement de circuit de protection

(30) Priorität: 18.03.2011 DE 102011014487; 08.04.2011 DE 102011007042; 12.07.2011 DE 102011079033
(43) Veröffentlichungstag der Anmeldung: 19.09.2012
(73) Patentinhaber: Elektro-Bauelemente GmbH, 44536 Lünen (DE)
(72) Erfinder: Kachouh, Checrallah, 44227 Dortmund (DE); Gallina, Karlheinz, 59129 Bergkamen (DE)
(74) Vertreter: Wickord, Wiro

(56) Entgegenhaltungen:
- EP-A1- 1 983 631
- EP-A2- 2 180 569
- WO-A1-2010/097922
- WO-A1-2010/112251
- WO-A1-2011/012450
- DE-A1- 19 735 412
- DE-A1-102009 001 962
- DE-A1-102009 025 302
- DE-A1-102009 034 886
- DE-A1-102009 034 887
- DE-A1-102010 023 126
- JP-A- 2011 024 317
- US-A- 4 347 472
- US-A- 4 947 278
- US-A1- 2009 015 973
- US-A1- 2010 225 274
- US-A1- 2011 300 753
- "DIN EN 50178", Deutshe Norm, April 1998 (1998-04), pages 1-125,
- Deutsche Kommission Elektrotechnik, "Die Blitzschutz-Normen DIN EN 62305 / VDE 0185-305:2006" 12. Oktober 2006

## Beschreibung

Die Erfindung betrifft eine Schutzschaltungsanordnung nach dem Oberbegriff der Patentansprüche 1 und 2.

Aus der DE 10 2009 034 886 A1 ist eine Ladestation für Elektrofahrzeuge mit einer gattungsgemäßen Schutzschaltungsanordnung bekannt. Ferner ist aus der EP 1 983 631 A1 ein elektrischer Stromkreis mit einer Notabschaltung realisiert. Es ist hierbei eine Steuerung vorgesehen zum Ansteuern eines Relais, welches notwendigenfalls ein Ableitungsstromkreis schließt und hierdurch eine Betätigung eines Fehlerstromschutzschalters bewirkt. Verwendung findet dieser Stromkreis beispielsweise in zum Antreiben von Maschinen vorgesehenen in Elektromotoren.

Aus der DE 10 2009 025 302 A1 ist eine Schaltungsanordnung zur Kommunikation zwischen einer Ladestation und einem Elektrofahrzeug bekannt, um die Ladebereitschaft der Ladestation gegenüber dem Elektrofahrzeug bzw. die Ladestromannahmebereitschaft des Elektrofahrzeugs gegenüber der Ladestation zu signalisieren. Darüber hinaus wird der maximale Ladestrom mittels einer Pulsweitenmodulation (PWM) von der Ladestation zu dem Elektrofahrzeug übertragen. Diese Kommunikationssignale werden über eine Ladesignalleitung eines die Ladestation mit dem Elektrofahrzeug verbindenden Ladekabel (Ladeleitung) übertragen, während der Ladestrom selbst über eine ein- oder mehrpolige Ladeleistungsleitung des Ladekabels übertragen wird. Während des Ladevorgangs, bei dem der Energiespeicher des Elektrofahrzeugs über das Ladekabel von der Ladestation mit dem Ladestrom gespeist wird, befindet sich das Spannungsniveau der Ladesignalleitung auf einem relativ niedrigen Wert, beispielsweise 3 V oder 6 V. Ist der Ladevorgang beendet und soll ein Stecker des Ladekabels von einem Anschluss des Elektrofahrzeugs oder der Ladestation gezogen werden, steigt das Spannungsniveau des Ladesignalleitung auf einen erhöhten Wert, beispielsweise 9 V. Üblicherweise weist die Ladestation eine Steuereinheit mit einem Mikrokontroller und einem Programmspeicher auf, der mittels einer Abschaltroutine (Abschaltprogramm) ein Abschaltsignal erzeugt, mittels dessen eine Schalteinheit der Ladeleistungsleitung geöffnet wird, um den Ladestromfluss zu beenden. Erst danach kann der Nutzer des Fahrzeugs den Stecker des Ladekabels lösen bzw. kann eine Abrechnung des Ladestrombezugs erfolgen. Die Abschaltung des Ladestroms erfolgt Software gestützt mittels eines Ladesteuerungsprogramms. Weist das Ladesteuerungsprogramm einen Fehler auf oder hängt sich das System auf, kann die Abschaltroutine versagen mit der Folge, dass der Ladestrom nicht deaktiviert wird.

Es ist daher Aufgabe der vorliegenden Erfindung, eine Schutzschaltungsanordnung zum Abschalten eines von einer Ladestation bereitgestellten Ladestroms derart anzugeben, dass auf einfache und sichere Weise eine Abschaltung des Ladestroms gewährleistet ist in einem Normalbetriebszustand der Ladestation bzw. im Fehlerfall, in dem die normale Abschaltung des Ladestroms versagt.

Zur Lösung dieser Aufgabe weist die Erfindung die Merkmale der Patentansprüche 1 und 2 auf.

Die erfindungsgemäße Schutzschaltungsanordnung ermöglicht eine Hardware gestützte und daher sichere und zuverlässige Abschaltung des Ladestroms in einem Normalbetriebszustand der Ladestation und in einem Notfall, wenn für die Ladestromabschaltung vorgesehene Betriebsmittel der Ladestation versagen. Die Erfindung sieht eine verdrahte Abschaltsteuerschaltung vor, die in Abhängigkeit von Zustandssignalen von elektrischen Betriebsmitteln, nämlich von einer Ladesignalleitung und/oder einer Schalteinheit der Ladestation, ein Abschaltsignal erzeugt, das zur Ansteuerung einer vorhandenen oder zusätzlichen Schalteinheit der Ladestation dient. Durch Schalten dieser Schalteinheit wird unmittelbar oder mittelbar eine Ladeleistungsleitung geöffnet, so dass der Ladestrombezug bzw. der Ladevorgang beendet ist und der Nutzer des Fahrzeugs einen Stecker des Ladekabels von der Steckdose der Ladestation entnehmen kann. Vorteilhaft ermöglicht die Erfindung somit, dass die Ladelastleistung sicher getrennt und die Steckdose spannungsfrei geschaltet wird. Zudem ist gewährleistet, dass in einem Fehlerfall von Betriebsmitteln der Ladestation der Ladestrombezug abgerechnet und auf jeden Fall das Ladekabel von der Ladestation entfernt werden kann. Durch Abgabe einer Notfallmeldung an eine ortsfern gelegene Überwachungsstation kann ein Servicemitarbeiter zur Reparatur der Ladestation angefordert werden.

Es kann eine Vergleicherabschaltsteuerschaltung vorgesehen sein, mittels derer der Ladestrom im Normalbetriebszustand der Ladestation hardwaremäßig abgeschaltet werden kann. Für diesen Fall ist es nach der Erfindung vorgesehen, dass das Zustandssignal einer Ladesignalleitung mittel eines Vergleichers mit einem Abschaltschwellwert vergleichen wird. Der Abschaltschwellwert liegt beispielsweise bei 7,5 V, so dass ein Abschaltsignal als Ausgangssignal erzeugt wird, wenn der Spannungswert der Ladesignalleitung von 3 V oder 6 V auf 7,5 V gestiegen ist. Nach der Erfindung wird somit der Zustand der Ladesignalleitung für die Erkennung genutzt, ob der Ladestrom abgeschaltet werden soll oder nicht. Grundsätzlich soll der Abschaltschwellwert fest vorgegeben sein. Er soll so gewählt sein, dass - wenn das Zustandssignal den Abstandsschwellwert überschreitet - mit Sicherheit angenommen werden kann, dass kein Ladestrombezug mehr erfolgen soll. Vorteilhaft ermöglicht der Vergleicher somit eine sichere Auswertung der Ladesignalleitung dahingehend, ob eine Ladestromanforderung seitens des Fahrzeugs besteht oder nicht.

Optional kann die in Hardware realisierte Vergleicherabschaltsteuerung zusätzlich zu eine in Software ausgeführten Abschaltroutine vorgesehen sein. Hierdurch wird eine Abschaltredundanz für den Normalbetrieb der Ladestation geschaffen, die die Sicherheit und Zuverlässigkeit weiter erhöht.

Nach einer Weiterbildung der ersten Ausführungsform der Erfindung ist die Schalteinheit als ein Schütz ausgebildet, das ohnehin in der Ladestation vorhanden ist zum Ein- und Ausschalten der mit einer Stromversorgungseinheit verbundenen Ladeleistungsleitung. Das Schütz kann beispielsweise eine Mehrzahl von Ladeleistungsleitungen gekoppelt schalten. Beispielsweise kann das Schütz Trennereigenschaften aufweisen.

Nach einer Weiterbildung der Erfindung ist die Schalteinheit so ausgebildet, dass bei offenen Kontakten in einem einphasigen System eine Stoßspannungsfestigkeit bis 3 kV und in einem dreiphasigen System eine Stoßspannungsfestigkeit bis 5 kV gegeben ist. Vorteilhaft ist hierdurch eine Schalteinheit der Überspannungskategorie 3 realisiert. Beispielsweise kann die Schalteinheit als ein Schütz ausgebildet sein, dessen Kontakte im geöffneten Zustand die hierzu erforderlichen Luft- und Kriechstrecken aufweisen.

Nach der Erfindung ist eine Notabschaltsteuerschaltung vorgesehen, die ein Verknüpfungsglied aufweist, an dessen Eingang zum einen ein Abschaltsteuersignal der Steuereinheit und zum anderen ein Zustandssignal der Schalteinheit anliegt. Das Abschaltsteuersignal der Steuereinheit und das Zustandssignal der Schalteinheit werden derart verknüpft, dass ein das Öffnen der Ladeleistungsleitung bewirkendes Abschaltsignal nur erzeugt wird, wenn ein Fehler in der Schalteinheit vorliegt. Beispielsweise kann der Fehler durch ein Kleben der als Schütz ausgebildeten Schalteinheit begründet sein. Als ein Zustandssignal des Schützes kann beispielsweise das Signal eines Hilfskontaktes dienen. Befindet sich das Zustandssignal der Schalteinheit in einem die Notabschaltung bedürfenden Aktivierungszustandes einerseits und befindet sich das Abschaltsteuersignal der Steuereinheit ebenfalls in einem die Ladestromabschaltung fordernden Aktivierungszustand, erzeugt das Verknüpfungsglied ein Abschaltsignal, das auf eine gesonderte Schalteinheit derart einwirkt, dass die Ladeleistungsleitungen geöffnet werden.

Nach einer Weiterbildung der zweiten Ausführungsform der Erfindung ist die Ladestrom abschaltende Schalteinheit als eine gesonderte Notschalteinheit ausgebildet, die eine elektrische Verbindung zwischen der Ladeleistungsleitung einerseits und einer Schutzleitung oder der Nullleitung andererseits herstellt. Hierdurch wird dem System ein Kurzschluss vorgetäuscht, der zum Auslösen einer Fehlerstromschutzschalteinheit führt. Grundgedanke hierbei ist es, den Ladestrom zumindest teilweise so umzuleiten, dass die Fehlerstromschutzschalteinheit auslöst. Die den Ladestrom führende Ladeleistungsleitung wird im Notfallzustand somit sicher geöffnet, wobei mit Ausnahme der Schaltzustandsanzeige alle Eigenschaften eines Trenner-Schaltgerätes erfüllt werden und Trennerfunktionen realisiert werden. Ein zuverlässiges Trennen der Ladeleistungsleitung ist ohne Zwangsbetätigung des Schützes möglich, und das Schütz selbst kann Trennereigenschaften aufweisen hinsichtlich der Luft- und Kriechstrecke.

Nach einer Weiterbildung der zweiten Ausführungsform ist eine mit dem Abschaltsignal ansteuerbare Notschalteinheit vorgesehen, die eine elektrische Verbindung zwischen der Nullleitung und der Schutzleitung derart herstellt, dass die Fehlerstromschutzschalteinheit auslöst. Beispielsweise kann hierzu eine Stromeinprägeeinheit vorgesehen sein, die mit der Notschalteinheit zusammenwirkt und in die elektrische Verbindung zwischen der Nullleitung und der Schutzleitung einen Strom einprägt. Auch auf diese Weise kann die Fehlerstromschutzschalteinheit durch betätigen der Notschalteinheit ausgelöst und die Ladelastleitung geöffnet werden.

Die Stromeinprägeeinheit kann beispielsweise als ein Schaltnetzteil, als eine Batterie bzw. ein Akkumulator oder als ein Transformator ausgebildet sein. Beispielsweise kann die Stromeinprägeeinheit als eine Sicherheitstromeinprägeeinheit ausgebildet sein, die bei einer Kleinspannung betrieben wird. Bei einer Wechselspannung ist die bis zu einem Effektivwert von 50V und bei einer Gleichspannung bis zu 120V der Fall.

Nach einer Weiterbildung der zweiten Ausführungsform kann in Reihe zu der Notschalteinheit ein elektrischer Verbraucher, insbesondere eine Heizeinheit zum Erwärmen von Betriebsmitteln der Ladestation ausgebildet sein. Vorteilhaft kann die für die Abschaltung notwendige abgezweigte elektrische Energie für Betriebsmittel der Ladestation genutzt werden. Überdies ist durch die Zuschaltung des Verbrauchers eine Dauerstromfestigkeit geschaffen, und durch die Verwendung ohnehin vorhandener Komponenten kann eine kostengünstige Lösung geschaffen werden.

Nach einer Weiterbildung der Erfindung ist die Notschalteinheit in Reihe mit einer Sekundärwicklung eines als Stromeinprägeeinheit dienenden Transformators vorgesehen. Durch das Vorsehen des Transformators kann die Sicherheit weiter verbessert werden. Hierzu kann der Transformator beispielsweise als kurzschlussfester Sicherheitstransformator (Klingeltransformator) ausgebildet sein. Im Bereich der Sekundärseite kann eine niedrige Spannung, insbesondere 24 V oder weniger, vorzugsweise 8 V, anliegen. An der Primärseite des Transformators kann eine feste, nicht änderbare Primärspannung (z. B. 230 V) anliegen.

Die Notschalteinheit und der Transformator können zwischen der Schutzleitung einerseits und der Ladelastleitung bzw. der Nullleitung andererseits vorgesehen sein. Unter Sicherheitsgesichtspunkte ist insbesondere eine Anordnung zwischen der Schutzleitung und der Nullleitung vorteilhaft.

Die Fehlerstromschutzschalteinheit kann beispielsweise derart ausgelegt, dass bei einem Fehlerstrom vom 30 mA oder mehr der Ausgangsanschluss spannungsfrei geschaltet bzw. die Ladelastleitung getrennt wird. Vorteilhaft ist die Schaltschwelle von 30 mA derart gewählt, dass einerseits im Bereich des Üblichen liegende Schwankungen toleriert werden, ohne dass die Fehlerstromschutzschalteinheit ausgelöst und der Ladevorgang unterbrochen wird, und dass andererseits die Ladelastleitung getrennt wird, sobald der Fehlerstrom das tolerierte Maß übersteigt und ein sicherheitskritischer Fehler auftritt. Insofern ist der Schwellwert ein Kompromiss, der einen stabilen Ladevorgang einerseits und einen sicheren Betrieb der Ladestation andererseits gewährleistet.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:

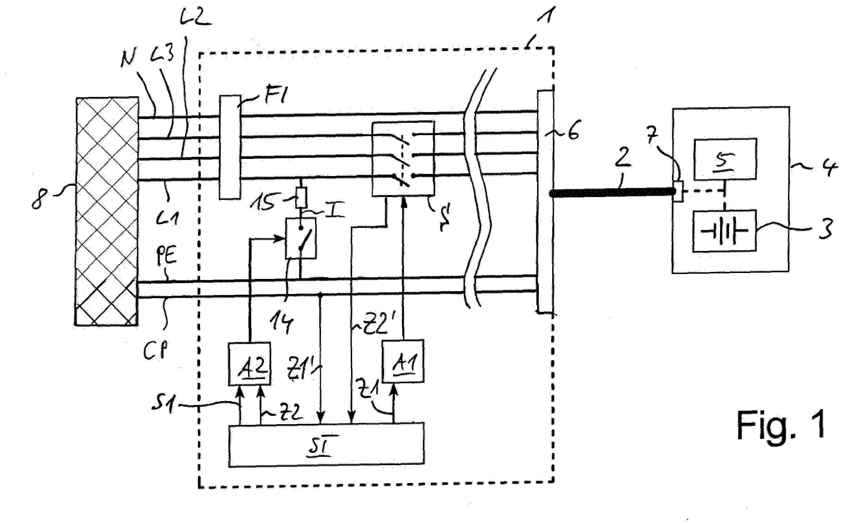

- Figur 1: ein Blockschaltbild einer erfindungsgemäßen Schutzschaltungsanordnung,
- Figur 2: ein Schaltbild einer Vergleicherabschaltsteuerschaltung,
- Figur 3: ein Schaltbild einer Notabschaltsteuerschaltung,
- Figur 4: eine alternative Anordnung zum Auslösen einer Fehlerstromschutzschalteinheit der Schutzschaltanordnung nach Figur 1 und
- Figur 5: eine weitere alternative Ausführungsform der Anordnung zum Auslösen der Fehlerstromschutzschalteinheit.

Eine erfindungsgemäße Schutzschaltungsanordnung ist innerhalb einer Ladestation 1 angeordnet, die über ein Ladekabel 2 zur Übertragung von elektrischer Energie an einen Energiespeicher 3 eines Elektrofahrzeugs 4 dient. Das Elektrofahrzeug weist neben dem Energiespeicher 3 ein Energiespeicher-Steuergerät 5 auf, das über das Ladekabel 2 mit einer Steuereinheit ST der Ladestation 1 kommuniziert.

Das Ladekabel 2 verfügt endseitig über Stecker, die mit einem entsprechenden Ausgangsanschluss 6 (Steckdose) der Ladestation 1 und mit einem Eingangsanschluss (Stecker) 7 des Elektrofahrzeugs 4 elektrisch und mechanisch verbunden sind. Das Ladekabel 2 bildet eine Ladeleitung, die zum einen vorzugsweise eine mehrpolige Ladeleistungsleitung (Ladeleistungsleitungen L1, L2, L3), eine Nullleitung N, eine Schutzleitung PE sowie eine Ladesignalleitung CP aufweist. Die Ladesignalleitung CP dient zur Kommunikation zwischen der Ladestation 1 und dem Elektrofahrzeug 4 und enthält die Information über den maximalen kontinuierlichen Ladestrom, der mittels der Ladeleitung 2 übertragen wird. Dieser maximale Ladestrom wird mittels einer Pulsweitenmodulation (PWM) über die Ladesignalleitung CP übertragen.

Ist ein Elektrofahrzeug 4 über die Ladeleitung 2 an der Ladestation 1 angeschlossen, wird im Normalbetriebszustand über die Ladeleistungsleitungen L1, L2, L3 der Ladestrom, den die Ladestation 1 von einer Stromversorungseinheit 8 (Stromnetz) bezieht, an den Energiespeicher 3 des Fahrzeugs 4 übertragen. Die Steuerung des Ladevorgangs wird durch die Steuereinheit ST bewirkt, die die entsprechenden Steuersignale an die entsprechenden Schaltmittel abgibt. Als weiteres Betriebsmittel kann die Ladestation 1 beispielsweise einen nicht dargestellten Gleichrichter aufweisen. Ebenfalls kann ein Gleichrichter im Fahrzeug 4 vorgesehen sein.

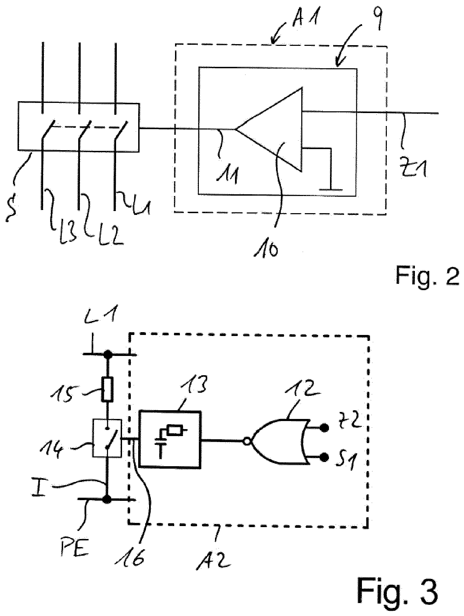

Im normalen Betriebszustand wird der Ladevorgang dadurch beendet, dass über die Ladesignalleitung CP ein entsprechendes Signal Z1' erzeugt wird. Beispielsweise wird eine Spannung von 3V oder 6 V nominell auf 9 V nominell erhöht. Das Spannungssignal Z1' wird direkt oder - wie dargestellt - über die Steuereinheit indirekt als Zustandssignal Z1 auf den Vergleicherabschaltsteuerung A1 mit einem Vergleicher 9 gegeben. Wie näher aus Figur 2 ersichtlich ist, wird das Zustandssignal Z1 mittels eines Differenzierers mit einem Abstandsschwellwert vergleichen und auf Basis des Vergleichs ein Ausgangssignal 11 erzeugt. Der Vergleicher 9 weist einen Differenzierer 10 auf, der das Abschaltsignal 11 erzeigt, sobald das Zustandssignal Z1 einen Spannungswert von 7,5 V übersteigt. Die Ladesignalleitung CP dient hierbei als Abschalterkennungseinrichtung, weil während des Ladevorgangs der an der Ladesignalleitung CP anliegende Spannungswert im Wesentlichen 3 V oder 6 V beträgt und zur Kennzeichnung des Abschaltwunsches auf 9 V angehoben wird. Übersteigt der Wert des Zustandssignal Z1 den Abschalt-Schwellwert von 8 V, erzeugt der Vergleicher das Abschaltsignal 11. Mit dem Abschaltsignal 11 wird eine Schalteinheit S, die beispielsweise als ein Schütz S ausgebildet ist, beaufschlagt. Über das Schütz S werden die Ladeleistungsleitungen L1, L2, L3 geschaltet.

Die Schutzschaltungsanordnung umfasst ferner eine zweite Notabschaltsteuerschaltung A2, die im Wesentlichen aus einem Verknüpfungsglied 12 und einer Verzögerungsschaltung 13 gebildet ist, die auf eine Notschalteinheit (Relais 14) und einem elektrischen Verbraucher 15 wirkt (Figur 3). Das Relais 14 und der elektrische Verbraucher 15 sind zwischen einem Anschluss der ersten Ladeleistungsleitung L1 und der als Schutzleitung ausgebildeten Ladesignalleitung PE in Reihe zueinander angeordnet. Die zweite Notabschaltsteuerschaltung A2 ist dafür vorgesehen, eine Abschaltung des Ladestroms zu bewirken, wenn das Schütz S defekt ist, das heißt klemmt oder dergleichen. Ein Abschaltsignal 16 wird hierbei erzeugt, wenn das Abschaltungssteuersignal S1 ein Abschalten signalisiert und ein den Schaltzustand des Schützes S kennzeichnendes Zustandssignal Z2 anzeigt, dass das Schütz S nicht geöffnet ist.

Das Verknüpfungsglied 12 ist als ein NOR-Verknüpfungsglied ausgebildet, an dem eingangsseitig das Abschaltsteuersignal S1 der Steuereinheit ST und das Zustandssignal Z2 des Schützes S anliegen. Ein Abschaltsignal 16 zur Ansteuerung des Relais 14 (Notschalteinheit) im Sinne einer elektrischen Verbindung zwischen der Ladeleistungsleitung L1 und der Ladesignalleitung PE wird nur dann erzeugt, wenn sich die Eingänge an dem NOR-Verknüpfungsglied im L-Zustand befinden. Das Zustandssignal S1 der Steuereinheit ST befindet sich im L-Zustand bzw. in einem die Abschaltung des Ladestroms bewirkenden Aktivierungszustand, der die Abschaltung des Ladestroms nach sich ziehen würde, wenn das Schütz S nicht defekt wäre. Das Schutzzustandssignal Z2 befindet sich im Aktivierungszustand bzw. im L-Zustand, wenn das Schütz S defekt ist. Zu Detektion des Schaltzustands des Schützes S wird ein entsprechendes Hilfskontaktsignal Z2' an die Steuereinheit ST übertragen, in der es aufbereitet und als Zustandssignal Z2 an den Eingang des NOR-Verknüpfungsgliedes 12 gelegt wird. Alternativ kann das Hilfskontaktsignal Z2' unter Umgehung der Steuereinheit ST mit dem Verknüpfungsglied 12 verbunden werden.

Wäre das Schütz S nicht defekt, würde sich das Schutzzustandssignal Z2 im H-Zustand befinden. Das Schütz S würde in diesem normalen Betriebszustand aufgrund des L-Zustandes des Abschaltsteuersignals S1 auslösen und den Ladestrom abschalten. Im Fehlerfall des Schützes S bewirkt das Verknüpfungsglied 12 das Abschaltsignal 16, nachdem es mittels der Verzögerungsschaltung 13 verzögert wurde, um ein sicheres Abschaltsignal zu erzeugen. Das Abschaltsignal 16 steuert das Relais 14 an, so dass ein "Fehlerstrom" I über den Schutzleiter PE abfließen kann und somit eine Fehlerstromschutzschalteinheit FI auslöst, die die Ladeleistungsleitung L1 öffnet. Der Ladestrom ist somit abgeschaltet, so dass das Ladekabel 2 von der Ladestation 1 entfernt werden kann.

Der elektrische Verbraucher 15 kann als ein Widerstand oder beispielsweise als eine Heizeinheit zur Erwärmung von Betriebsmitteln der Ladestation 1 ausgebildet sein.

Nach einer nicht dargestellten alternativen Ausführungsform der Ladestation 1 kann dieselbe auch entweder die erste Notabschaltsteuerschaltung A1 oder die zweite Notabschaltsteuerschaltung A2 aufweisen.

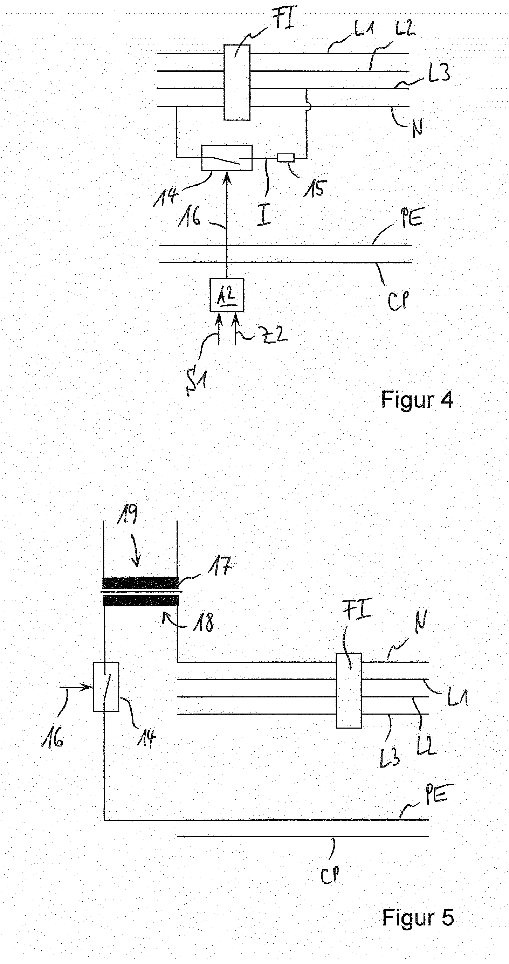

In einer alternativen Anordnung zum Abschalten des Ladestroms bei Defekten, insbesondere klemmenden Schütz, gemäß Figur 4 ist vorgesehen, dass Relais 14 und den hierzu in Reihe geschalteten Widerstand 15 (elektrischer Verbraucher) zwischen der Ladelastleitung L3 und der Nullleitung N vorzusehen. Hierbei liegen die Verbindungspunkte der gegenüberliegenden Seiten der Fehlerstromschutzschalteinheit FI, d. h. die zwischen der Nullleitung N und der Ladelastleitung L3 vorgesehene elektische Verbindung mit dem Relais 14 und dem Widerstand 15 wird an der Fehlerstromschutzschalteinheit FI vorbeigeführt bzw. "überbrückt" dieselbe. Wie gehabt wird das über die zweite Notabschaltsteuerschaltung A2 generierte Abschaltsignal 16 zur Betätigung des Relais 14 verwendet. Bei geschlossenem Relais 14 fließt der Fehlerstrom I unter Umgehung der Fehlerstromschutzschalteinheit FI zwischen der Ladelastleitung L3 und der Nullleitung N. Infolge dieses Stromflusses zwischen der Nullleitung N und der Ladelastleitung L3 löst die Fehlerstromschutzschalteinheit FI aus mit der Folge, dass der Ladestrom unterbrochen ist und das Ladekabel 2 von der Ladestation 1 entfernt werden kann.

Im Rahmen der Erfindung kann abweichend von der Darstellung nach Figur 4 die Ladelastleitung L3 vor und die Nullleitung N hinter der Fehlerstromschutzschalteinheit FI verbunden werden. Insofern ist lediglich wichtig, dass die Leitungen L3, N auf gegenüberliegenden Seiten der Fehlerstromschutzschalteinheit FI abgegriffen werden und die das Relais 14 aufweisende elektrische Verbindung nicht durch die Fehlerstromschutzschalteinheit geführt wird bzw. diesen umgeht. Ebenfalls kann statt der Ladelastleitung L3 jede beliebige andere Ladelastleitung L1, L2 mit der Nullleitung N verbunden werden.

Eine weitere alternative Anordnung gemäß Figur 5 sieht vor, dass zwischen der Schutzleitung PE und der Nullleitung N das Relais 14 und als eine Stromeinprägeeinheit ein Transformator 17 zusammenwirken. Der Transformator 17 ist beispielsweise als ein kurzschlussfester Sicherheitstransformator 17 (z. B. Klingeltransformator) ausgebildet, dessen Luftspalt so gewählt ist, dass es auch bei einem Kurzschluss einer Sekundärwicklung des Transformators 17 zu keiner unzulässigen Erwärmung kommt. Die Sekundärwicklung des Transformators 17 ist hierbei in Reihe geschaltet zu der Notschalteinheit (Relais 14). Eine primäre Seite 19 des Sicherheitstransformators 17 ist beispielsweise auf eine Spannung von 230 V und eine Sekundärseite 18 auf eine Kleinspannung von 8 V ausgelegt.

Die alternative Anordnung gemäß Figur 5 kann beispielsweise in einer verteilt angeordneten Ladestation, einer sogenannten Master-Slave-Anordnung vorgesehen sein. Hierbei ist etwa auf einem Parkplatz eine zentrale Komponente der Ladestation (Master) an einem ersten Ort und wenigstens eine, in der Regel eine Mehrzahl dezentraler Komponenten (Slaves) ortsfern von der ersten Komponente angeordnet. Beispielsweise enthält die zentrale Komponente die zentrale Steuerung, während in den dezentralen Komponenten die Ausgangsanschlüsse 6 vorgesehen sind. Die dezentralen Komponenten sind dann beispielsweise den einzelnen Parkplätzen räumlich zugeordnet, während die zentrale Komponente etwa durch eine Überdachung geschützt im Bereich der Parkplatzein- oder -ausfahrt vorgesehen sein kann. Die Konfiguration der Master-Slave-Anordnung kann beispielsweise so aussehen, dass der Sicherheitstransformator 17 und die Fehlerstromschutzschalteinheit FI in der dezentralen Komponente (Slave) und das Relais 14 in der zentralen Komponente (Master) vorgesehen ist.

In den verschiedenen Konfigurationen kann die Fehlerstromschutzschalteinheit FI so ausgelegt sein, dass bei dem Fehlerstrom I von 30 mA oder mehr der Ladestrom abgeschaltet wird.

Gleiche Bauteile und Bauteilfunktionen sind durch gleiche Bezugszeichen gekennzeichnet.

## Patentansprüche

1. Schutzschaltungsanordnung zum Abschalten eines von einer Ladestation (1) bereitgestellten Ladestroms, wobei die Ladestation (1) mit einer Stromversorgungseinheit (8) elektrisch verbindbar ist zur Speisung des Ladestroms, wobei ein Ausgangsanschluss (6) der Ladestation (1) über ein Ladekabel (2) mit einem Eingangsanschluss (7) eines Elektrofahrzeugs (4) verbindbar ist zum Laden eines Energiespeichers (3) des Elektrofahrzeugs (4) mit dem Ladestrom, mit einer Schalteinheit (S) zum Öffnen und/oder Schließen einer an der Stromversorgungseinheit angeschlossenen Ladestromleitung der Ladestation (1) in Abhängigkeit von einem Abschaltsignal (16), mit einer Steuereinheit (ST) zur Ansteuerung der Schalteinheit (S) und mit einer Fehlerstrom-Schutzschalteinheit (FI) zum Abschalten der Ladeleitung bei Erkennung eines Fehlerstroms, **dadurch gekennzeichnet, dass** eine Abschaltsteuerschaltung (A1, A2) vorgesehen ist, die in Abhängigkeit von einem durch eine in der Steuereinheit (ST) ablaufenden Abschaltroutine erzeugten Abschaltsteuersignals (S1) und einem Zustandssignal (Z2) der Schalteinheit (S) einerseits und in Abhängigkeit von einem Zustandssignal (Z1) einer den Ladestrom abschaltende Ladesignalleitung (CP) andererseits das Abschaltsignal (11, 16) erzeugt, und dass die Abschaltsteuerschaltung eine Notabschaltsteuerschaltung (A2) mit einem Verknüpfungsglied (12) aufweist, an dessen Eingang das Abschaltsteuersignal (S1) der Steuereinheit (ST) und das den Zustand der Schalteinheit (S) repräsentierende Zustandssignal (Z2) anliegen, und dass das Verknüpfungsglied (12) derart ausgebildet ist, dass bei Vorliegen eines Aktivierungszustandes des Abschaltsteuersignals (S1) der Steuereinheit (ST) und bei Vorliegen eines die Fehlfunktion der Schalteinheit (S) repräsentierendes Aktivierungszustandes des Zustandssignals (Z2) das den Ladestrom abschaltende Abschaltsignal (16) generiert wird, und dass das Abschaltsignal (16) auf die Fehlerstrom-Schutzschalteinheit (FI) derart einwirkt, dass die Ladeleistungsleitungen geöffnet werden, wobei eine mit dem Abschaltsignal (16) ansteuerbare Notschalteinheit (14) vorgesehen ist, die im Notfallzustand eine elektrische Verbindung zwischen wenigstens einer Ladeleistungsleitung (L1, L2, L3) einerseits und einer Schutzleitung (PE) oder der Nulleitung (N) andererseits zwischen Verbindungspunkten auf gegenüberliegenden Seiten der Fehlerstromschutzschalteinheit (FI) herstellt derart, dass die Fehlerstromschutzschalteinheit (FI) auslöst.

2. Schutzschaltungsanordnung zum Abschalten eines von einer Ladestation (1) bereitgestellten Ladestroms, wobei die Ladestation (1) mit einer Stromversorgungseinheit (8) elektrisch verbindbar ist zur Speisung des Ladestroms, wobei ein Ausgangsanschluss (6) der Ladestation (1) über ein Ladekabel (2) mit einem Eingangsanschluss (7) eines Elektrofahrzeugs (4) verbindbar ist zum Laden eines Energiespeichers (3) des Elektrofahrzeugs (4) mit dem Ladestrom, mit einer Schalteinheit (S) zum Öffnen und/oder Schließen einer an der Stromversorgungseinheit angeschlossenen Ladestromleitung der Ladestation (1) in Abhängigkeit von einem Abschaltsignal (16), mit einer Steuereinheit (ST) zur Ansteuerung der Schalteinheit (S) und mit einer Fehlerstrom-Schutzschalteinheit (FI) zum Abschalten der Ladeleitung bei Erkennung eines Fehlerstroms, **dadurch gekennzeichnet, dass** eine Abschaltsteuerschaltung (A1, A2) vorgesehen ist, die in Abhängigkeit von einem durch eine in der Steuereinheit (ST) ablaufenden Abschaltroutine erzeugten Abschaltsteuersignals (S1) und einem Zustandssignal (Z2) der Schalteinheit (S) einerseits und in Abhängigkeit von einem Zustandssignal (Z1) einer den Ladestrom abschaltende Ladesignalleitung (CP) andererseits das Abschaltsignal (11, 16) erzeugt, und dass die Abschaltsteuerschaltung eine Notabschaltsteuerschaltung (A2) mit einem Verknüpfungsglied (12) aufweist, an dessen Eingang das Abschaltsteuersignal (S1) der Steuereinheit (ST) und das den Zustand der Schalteinheit (S) repräsentierende Zustandssignal (Z2) anliegen, und dass das Verknüpfungsglied (12) derart ausgebildet ist, dass bei Vorliegen eines Aktivierungszustandes des Abschaltsteuersignals (S1) der Steuereinheit (ST) und bei Vorliegen eines die Fehlfunktion der Schalteinheit (S) repräsentierendes Aktivierungszustandes des Zustandssignals (Z2) das den Ladestrom abschaltende Abschaltsignal (16) generiert wird, und dass das Abschaltsignal (16) auf die Fehlerstrom-Schutzschalteinheit (FI) derart einwirkt, dass die Ladeleistungsleitungen geöffnet werden, wobei eine mit dem Abschaltsignal (16) ansteuerbare Notschalteinheit (14) vorgesehen ist, die im Notfallzustand eine elektrische Verbindung zwischen der Nullleitung (N) und der Schutzleitung (PE) herstellt derart, dass die Fehlerstromschutzschalteinheit (FI) auslöst.

3. Schutzschaltungsanordnung nach Anspruch 1 oder 2, **dadurch gekennzeichnet, dass** die Abschaltsteuerschaltung eine Vergleicherabschaltsteuerschaltung (A1) aufweist mit einem Vergleicher (9), an dessen Eingang das den Zustand der Ladesignalleitung (CP) repräsentierende Zustandssignal (Z1) anliegen, und dass der Vergleicher (9) das Zustandssignal (Z1) mit einem Abschaltschwellwert vergleicht und abhängig vom Vergleich ein Ausgangssignal (11) erzeugt.

4. Schutzschaltungsanordnung nach einem der Ansprüche 1 bis 3, **dadurch gekennzeichnet, dass** der Vergleicher (9) einen Differenzierer (10) aufweist und/oder dass der Vergleicher (9) eine Zypressordiode aufweist.

5. Schutzschaltungsanordnung nach einem der Ansprüche 1 bis 4, **dadurch gekennzeichnet, dass** die Schalteinheit (S) als ein Schütz ausgebildet ist.

6. Schutzschaltungsanordnung nach einem der Ansprüche 1 bis 5, **dadurch gekennzeichnet, dass** die Schalteinheit (S) derart ausgebildet ist, dass bei offenen Kontakten in einem einphasigen System eine Stoßspannungsfestigkeit von mindestens 3 kV und in einem dreiphasigen System eine Stoßspannungsfestigkeit von mindestens 5 kV realisiert ist.

7. Schutzschaltungsanordnung nach einem der Ansprüche 1 bis 6, **dadurch gekennzeichnet, dass** die Schalteinheit (S) derart ausgebildet ist, dass eine Mehrzahl von Ladeleistungsleitungen (L1, L2, L3) der Ladeleitung gekoppelt geschaltet werden.

8. Schutzschaltungsanordnung nach Anspruch 1 oder 2, **dadurch gekennzeichnet, dass** das Verknüpfungsglied als ein NOR-Verknüpfungsglied (12) ausgebildet ist und dass die Aktivierungszustände des Zustandssignals (Z2) und des Abschaltsteuersignals (S1) als L-Zustände ausgebildet sind.

9. Schutzschaltungsanordnung nach einem der Ansprüche 1 bis 8, **dadurch gekennzeichnet, dass** sich ausgangsseitig des Verknüpfungsgliedes (12) eine Verzögerungsschaltung (13) anschließt.

10. Schutzschaltungsanordnung nach Anspruch 2, **dadurch gekennzeichnet, dass** die Notschalteinheit (14) mit einer Stromeinprägeeinheit (Transformator 17) zusammenwirkt derart, dass in der elektrischen Verbindung zwischen der Nullleitung (N) und der Schutzleitung (PE) ein Strom eingeprägt wird.

11. Schutzschaltungsanordnung nach Anspruch 10, **dadurch gekennzeichnet, dass** die Stromeinprägeeinheit (Transformator 17) als eine bei einer Kleinspannung betreibbare Sicherheitsstromeinprägeeinheit ausgebildet ist, und/oder dass die Stromeinprägeeinheit als ein Transformator (17) ausgebildet ist, wobei eine Sekundärwicklung (18) des Transformators (17) in Reihe mit der Notschalteinheit (14) angeordnet ist und/oder auf einer Primärseite (Primärwicklung 19) des Transformators (17) eine feste Transformatorspannung anliegt.

12. Schutzschaltungsanordnung nach einem der Ansprüche 1 bis 11, **dadurch gekennzeichnet, dass** die Notschalteinheit (14) in Reihe mit einem elektrischen Verbraucher (15), insbesondere mit einem dauerfest ausgelegten elektrischen Verbraucher (15), geschaltet ist.

13. Schutzschaltungsanordnung nach einem der Ansprüche 1 bis 12, **dadurch gekennzeichnet, dass** die Notschalteinheit (14) als ein Relais ausgebildet ist.

## Claims

1. Protective circuit assembly for disconnecting a charging current provided by a charging station (1), wherein the charging station (1) can be electrically connected to a power supply unit (8) for supplying the charging current, wherein an output terminal (6) of the charging station (1) can be connected via a charging cable (2) to an input terminal (7) of an electric vehicle (4) for charging an energy storage device (3) of the electric vehicle (4) with the charging current, with a switching unit (S) for opening and/or closing a charging current line of the charging station (1) connected to the power supply unit, said opening and/or closing depending on a shutdown signal (16), with a control unit (ST) for operating the switching unit (S) and with a residual-current circuit breaker unit (FI) for disconnecting the charging line on detecting a residual current, **characterised in that** a shutdown control circuit (A1, A2) is provided which, depending on a shutdown control signal (S1) generated by means of a shutdown routine running in the control unit (ST) and on a status signal (Z2) of the switching unit (S) on the one hand, and depending on a status signal (Z1) of a charging signal line (CP) disconnecting the charging current on the other hand, generates the shutdown signal (11, 16), and **in that** the shutdown control circuit has an emergency shutdown control circuit (A2) with a logic element (12) at whose input the shutdown control signal (S1) of the control unit (ST) and the status signal (Z2) representing the status of the switching unit (S) are in contact, and **in that** the logic element (12) is provided such that, in the event of an activation status of the shutdown control signal (S1) of the control unit (ST) and in the event of an activation status of the status signal (Z2) representing the malfunction of the switching unit (S), the shutdown signal (16) disconnecting the charging current is generated, and **in that** the shutdown signal (16) acts on the residual-current circuit breaker unit (FI) such that the charging power lines are opened, wherein an emergency switching device (14) is provided which is operable by way of the shutdown signal (16) and which, in the emergency state, establishes an electrical connection between at least one charging power line (L1, L2, L3) on the one hand and a protective earth conductor (PE) or the neutral conductor (N) on the other hand, between connection points on opposite sides of the residual-current circuit breaker unit (FI), in such a way that the residual-current circuit breaker unit (FI) triggers.

2. Protective circuit assembly for disconnecting a charging current provided by a charging station (1), wherein the charging station (1) can be electrically connected to a power supply unit (8) for supplying the charging current, wherein an output terminal (6) of the charging station (1) can be connected via a charging cable (2) to an input terminal (7) of an electric vehicle (4) for charging an energy storage device (3) of the electric vehicle (4) with the charging current, with a switching unit (S) for opening and/or closing a charging current line of the charging station (1) connected to the power supply unit, said opening and/or closing depending on a shutdown signal (16), with a control unit (ST) for operating the switching unit (S) and with a residual-current circuit breaker unit (FI) for disconnecting the charging line on detecting a residual current, **characterised in that** a shutdown control circuit (A1, A2) is provided which, depending on a shutdown control signal (S1) generated by means of a shutdown routine running in the control unit (ST) and on a status signal (Z2) of the switching unit (S) on the one hand, and depending on a status signal (Z1) of a charging signal line (CP) disconnecting the charging current on the other hand, generates the shutdown signal (11, 16), and **in that** the shutdown control circuit has an emergency shutdown control circuit (A2) with a logic element (12) at whose input the shutdown control signal (S1) of the control unit (ST) and the status signal (Z2) representing the status of the switching unit (S) are in contact, and **in that** the logic element (12) is provided such that, in the event of an activation status of the shutdown control signal (S1) of the control unit (ST) and in the event of an activation status of the status signal (Z2) representing the malfunction of the switching unit (S), the shutdown signal (16) disconnecting the charging current is generated, and **in that** the shutdown signal (16) acts on the residual-current circuit breaker unit (FI) such that the charging power lines are opened, wherein an emergency switching device (14) is provided which is operable by way of the shutdown signal (16) and which, in the emergency state, establishes an electrical connection between the neutral conductor (N) and the protective earth conductor (PE) in such a way that the residual-current circuit breaker unit (FI) triggers.

3. Protective circuit assembly according to claim 1 or 2, **characterised in that** the shutdown control circuit has a comparator shutdown control circuit (A1) with a comparator (9), to whose input the status signal (Z1) representing the status of the charging signal line (CP) is applied, and **in that** the comparator (9) compares the status signal (Z1) with a shutdown threshold value and generates an output signal (11) depending on the comparison.

4. Protective circuit assembly according to any one of claims 1 to 3, **characterised in that** the comparator (9) has a differentiator (10) and/or **in that** the comparator (9) has a suppressor diode.

5. Protective circuit assembly according to any one of claims 1 to 4, **characterised in that** the switching unit (S) is provided as a contactor.

6. Protective circuit assembly according to any one of claims 1 bis 5, **characterised in that** the switching unit (S) is provided such that with open contacts in a single-phase system a surge withstand capability of at least 3 kV and in a three-phase system a surge withstand capability of at least 5 kV is realised.

7. Protective circuit assembly according to any one of claims 1 to 6, **characterised in that** the switching unit (S) is provided such that a plurality of charging power lines (L1, L2, L3) are coupled to the charging line.

8. Protective circuit assembly according to claim 1 or 2, **characterised in that** the logic element is provided as a NOR logic element (12) and **in that** the activation statuses of the status signal (Z2) and of the shutdown control signal (S1) are provided as L-statuses.

9. Protective circuit assembly according to any one of claims 1 to 8, **characterised in that** a time delay circuit (13) is connected on the output side of the logic element (12).

10. Protective circuit assembly according to claim 2, **characterised in that** the emergency switching device (14) cooperates with a current injection unit (transformer 17) such that a current is injected in the electrical connection between the neutral conductor (N) and the protective earth conductor (PE).

11. Protective circuit assembly according to claim 10, **characterised in that** the current injection unit (transformer 17) is provided as a safety current injection unit operable at low voltage, and/or **in that** the current injection unit is provided as a transformer (17), wherein a secondary winding (18) of the transformer (17) is arranged in series with the emergency switching device (14) and/or a fixed transformer voltage is in contact on a primary side (primary winding 19) of the transformer (17).

12. Protective circuit assembly according to any one of claims 1 to 11, **characterised in that** the emergency switching device (14) is connected in series with an electrical consumer (15), particularly with a high-endurance electrical consumer (15).

13. Protective circuit assembly according to any one of claims 1 to 12, **characterised in that** the emergency switching device (14) is provided as a relay.

## Revendications

1. Agencement de circuit de protection destiné à couper un courant de charge fourni par une station de charge (1), dans lequel la station de charge (1) peut être électriquement reliée à une unité d'alimentation en courant (8) pour l'alimentation en courant de charge, dans lequel un raccordement de sortie (6) de la station de charge (1) peut être relié à un raccordement d'entrée (7) d'un véhicule électrique (4) par l'intermédiaire d'un câble de charge (2) dans le but de charger un accumulateur d'énergie (3) du véhicule électrique (4) avec le courant de charge, comportant une unité de commutation (S) destinée à ouvrir et/ou à fermer une ligne de courant de charge de la station de charge (1), raccordée à l'unité d'alimentation en courant, en fonction d'un signal de coupure (16), comportant une unité de commande (ST) destinée à commander l'unité de commutation (S) et comportant une unité de coupure de courant différentiel (FI) destinée à couper la ligne de charge lors de l'identification d'un courant différentiel, **caractérisé en ce qu'**un circuit de commande de coupure (Al, A2) est prévu, lequel génère le signal de coupure (11, 16) en fonction d'un signal de commande de coupure (S1) généré par une routine de coupure se déroulant dans l'unité de commande (ST) et d'un signal d'état (Z2) de l'unité de commutation (S), d'une part, et en fonction d'un signal d'état (Z1) d'une ligne de signalisation de charge (CP) coupant le courant de charge, d'autre part, et **en ce que** le circuit de commande de coupure présente un circuit de commande de coupure de secours (A2) doté d'un membre de liaison (12) à l'entrée duquel sont présents le signal de commande de coupure (S1) de l'unité de commande (ST) et le signal d'état (Z2) représentant l'état de l'unité de commutation (S), et **en ce que** le membre de liaison (12) est réalisé de manière à ce qu'en cas de présence d'un état d'activation du signal de commande de coupure (S1) de l'unité de commande (ST) et qu'en cas de présence d'un état d'activation du signal d'état (Z2) représentant le fonctionnement défectueux de l'unité de commutation (S), le signal de coupure (16) coupant le courant de charge soit généré et que le signal de coupure (16) agisse sur l'unité de coupure de courant différentiel (FI) de manière à ce que les lignes de capacité de charge soient ouvertes, dans lequel une unité de commutation de secours (14) pouvant être commandée par le signal de coupure (16) est prévue, laquelle, dans l'état de secours, établit une liaison électrique entre au moins une ligne de capacité de charge (L1, L2, L3) d'une part et une ligne de protection (PE) ou la ligne neutre (N) d'autre part entre des points de liaison situés sur des côtés opposés de l'unité de coupure de courant différentiel (FI), de manière à ce que l'unité de coupure de courant différentiel (FI) se déclenche.

2. Agencement de circuit de protection destiné à couper un courant de charge fourni par une station de charge (1), dans lequel la station de charge (1) peut être électriquement reliée à une unité d'alimentation en courant (8) pour l'alimentation en courant de charge, dans lequel un raccordement de sortie (6) de la station de charge (1) peut être relié à un raccordement d'entrée (7) d'un véhicule électrique (4) par l'intermédiaire d'un câble de charge (2) dans le but de charger un accumulateur d'énergie (3) du véhicule électrique (4) avec le courant de charge, comportant une unité de commutation (S) destinée à ouvrir et/ou à fermer une ligne de courant de charge de la station de charge (1), raccordée à l'unité d'alimentation en courant, en fonction d'un signal de coupure (16), comportant une unité de commande (ST) destinée à commander l'unité de commutation (S) et comportant une unité de coupure de courant différentiel (FI) destinée à couper la ligne de charge lors de l'identification d'un courant différentiel, **caractérisé en ce qu'**un circuit de commande de coupure (A1, A2) est prévu, lequel génère le signal de coupure (11, 16) en fonction d'un signal de commande de coupure (S1) généré par une routine de coupure se déroulant dans l'unité de commande (ST) et d'un signal d'état (Z2) de l'unité de commutation (S), d'une part, et en fonction d'un signal d'état (Z1) d'une ligne de signalisation de charge (CP) coupant le courant de charge, d'autre part, et **en ce que** le circuit de commande de coupure présente un circuit de commande de coupure de secours (A2) doté d'un membre de liaison (12) à l'entrée duquel sont présents le signal de commande de coupure (S1) de l'unité de commande (ST) et le signal d'état (Z2) représentant l'état de l'unité de commutation (S), et **en ce que** le membre de liaison (12) est réalisé de manière à ce qu'en cas de présence d'un état d'activation du signal de commande de coupure (S1) de l'unité de commande (ST) et qu'en cas de présence d'un état d'activation du signal d'état (Z2) représentant le fonctionnement défectueux de l'unité de commutation (S), le signal de coupure (16) coupant le courant de charge soit généré et que le signal de coupure (16) agisse sur l'unité de coupure de courant différentiel (FI) de manière à ce que les lignes de capacité de charge soient ouvertes, dans lequel une unité de commutation de secours (14) pouvant être commandée par le signal de coupure (16) est prévue, laquelle, dans l'état de secours, établit une liaison électrique entre la ligne neutre (N) et la ligne de protection (PE), de manière à ce que l'unité de coupure de courant différentiel (FI) se déclenche.

3. Agencement de circuit de protection selon la revendication 1 ou 2, **caractérisé en ce que** le circuit de commande de coupure présente un circuit comparatif de commande de coupure (A1) doté d'un comparateur (9) à l'entrée duquel le signal d'état (Z1) représentant l'état de la ligne de signalisation de charge (CP) est présent, et **en ce que** le comparateur (9) compare le signal d'état (Z1) avec une valeur seuil de coupure et génère un signal de sortie (11) en fonction de la comparaison.

4. Agencement de circuit de protection selon l'une quelconque des revendications 1 à 3, **caractérisé en ce que** le comparateur (9) présente un différenciateur (10) et/ou **en ce que** le comparateur (9) présente une diode de suppression.

5. Agencement de circuit de protection selon l'une quelconque des revendications 1 à 4, **caractérisé en ce que** l'unité de commutation (S) est réalisée en tant qu'un contacteur.

6. Agencement de circuit de protection selon l'une quelconque des revendications 1 à 5, **caractérisé en ce que** l'unité de commutation (S) est réalisée de manière à ce qu'en cas de contacts ouverts dans un système monophasé, une résistance aux ondes de choc d'au moins 3 kV soit réalisée et que dans un système triphasé, une résistance aux ondes de choc d'au moins 5 kV soit réalisée.

7. Agencement de circuit de protection selon l'une quelconque des revendications 1 à 6, **caractérisé en ce que** l'unité de commutation (S) est réalisée de manière à ce qu'une pluralité de lignes de capacité de charge (L1, L2, L3) de la ligne de charge soient commutées de manière couplée.

8. Agencement de circuit de protection selon la revendication 1 ou 2, **caractérisé en ce que** le membre de liaison est réalisé comme un membre de liaison NOR (12) et **en ce que** les états d'activation du signal d'état (Z2) et du signal de commande de coupure (S1) sont réalisés comme états L.

9. Agencement de circuit de protection selon l'une quelconque des revendications 1 à 8, **caractérisé en ce qu'**un circuit de retard (13) se raccorde côté sortie du membre de liaison (12).

10. Agencement de circuit de protection selon la revendication 2, **caractérisé en ce que** l'unité de commutation de secours (14) coopère avec une unité d'application de courant (transformateur 17) de manière à ce qu'un courant soit appliqué dans la liaison électrique entre la ligne neutre (N) et la ligne de protection (PE).

11. Agencement de circuit de protection selon la revendication 10, **caractérisé en ce que** l'unité d'application de courant (transformateur 17) est réalisée comme une unité d'application de courant de sécurité pouvant fonctionner à basse tension, et/ou **en ce que** l'unité d'application de courant est réalisée comme un transformateur (17), un enroulement secondaire (18) du transformateur (17) étant disposé en série avec l'unité de commutation de secours (14) et/ou une tension de transformateur fixe étant présente sur un côté primaire (enroulement primaire 1.9) du transformateur (17).

12. Agencement de circuit de protection selon l'une quelconque des revendications 1 à 11, **caractérisé en ce que** l'unité de commutation de secours (14) est commutée en série avec un consommateur électrique (15), notamment avec un consommateur électrique (15) conçu de manière durable.

13. Agencement de circuit de protection selon l'une quelconque des revendications 1 à 12, **caractérisé en ce que** l'unité de commutation de secours (14) est réalisée en tant qu'un relais.
